# EUROPEAN PATENT APPLICATION

(11) **EP 1 553 757 A1**
(43) Date of publication of application: **13.07.2005**
(21) Application number: 03766659.1
(22) Date of filing: 29.07.2003
(51) Int. Cl.: H04N 5/225, H04N 5/765, H04N 5/91

(54) **DIGITAL CAMERA**

(30) Priority: 01.08.2002 JP 2002224771
(71) Applicant: Seiko Epson Corporation, Shinjuku-ku, Tokyo 163-0811 (JP)
(72) Inventor: NAKAJIMA, Yasumasa c/o Seiko Epson Corporation, Suwa-shi, Nagano 392-8502 (JP); SHIRAKAWA, Masanobu c/o Seiko Epson Corporation, Suwa-shi, Nagano 392-8502 (JP); TSUJI, Shuji c/o Seiko Epson Corporation, Suwa-shi, Nagano 392-8502 (JP)
(74) Representative: Cloughley, Peter Andrew
(86) International application number: PCT/JP2003/009622
(87) International publication number: WO 2004/014067

(57) **Abstract**

Background data to be synthesized with the subject data in which the subject area to which an image represented by the subject data is allocated is previously set in an image represented by the background data, and partial background data associated with the background data, showing at least apart of the area of the image represented by the background data that includes the subject area and having the number of pixels accommodated in a display are stored in a nonvolatile memory. The subject data is synthesized with the partial background data and the synthesized image data is displayed on the display (S230). The subject data is associated with the background data associated with the partial background data and the associated image data is stored in the nonvolatile memory (S260 and S270).

## Description

### Technical Field

The present invention relates to a digital camera.

### Background Art

A digital camera has a use, for instance, for recording data as a material of a synthesized image. The synthesized image is widely used for printing a greeting card with a photograph, a photograph seal with a frame, or the like.

JP-A-2001-45352 discloses a digital camera that, when what is called a framing process is carried out, data (background data) showing a frame or a background and -data (the subject data) showing a subject are synthesized together and the synthesized image data is displayed on a display, and when a shutter switch for instructing a photographing operation is pressed down, the synthesized image data is recorded in an external memory.

The digital camera disclosed in the JP-A-2001-45352 displays the entire part of the background data on the display when the subject data is synthesized with the background data and the synthesized image data is displayed on the display. Accordingly, when the rate of the display subject area occupied relative to an image represented by the background data is small, the area in which the subject is displayed is narrow, so that the framing process is undesirably hardly performed. For instance, when a user desires to take a photograph of the whole of a person as a subject, the user needs to move remotely from the subject so that the whole of the person can be displayed on the narrow area. In addition thereto, since the whole of the person is displayed on the narrow area, the user hardly recognizes the expression of the person or the like. Further, when a moving subject is photographed, the moving subject is hardly caught in a narrow area, a subtle adjustment of a composition is difficult and a proper photographing timing is hardly caught.

Further, when the number of pixels of the background data is larger than the number of pixels capable of being displayed on a display, a process for converting the number of pixels of the background data is required depending on the display area of the display in order to display the whole of the background data. Thus, the background data cannot be displayed at high speed. Therefore, a maneuverability of the digital camera is deteriorated. Further, when a user desires to catch the above-described timing to photograph a subject, the user may possibly miss the timing.

### Disclosure of the Invention

The present invention is devised by considering the above-described problems and it is anobject of the present invention to provide a digital camera that can synthesize the subject data with background data and display the synthesized image data in a short time while easily recognizing a composition.

For achieving the above-described object, a digital camera according to the present invention comprises: a photographing unit for creating subject data in accordance with an output of an image sensor; a display; a nonvolatile memory that stores background data to be synthesized with the subject data in which a subject area to which an image represented by the subject data is allocated is previously set in an image represented by the background data, and partial background data that is associated with the background data, shows at least a part of an area of the image represented by the background data including the subject area and has a number of pixels accommodated in the display area of the display; a display control unit for synthesizing the subject data with the partial background data and displaying the synthesized image data on the display; and a subject data storing unit for storing the subject data in the nonvolatile memory while the subject data is associated with the background data that is associated with the partial background data.

In this digital camera, not the subject data and the background data, but the partial background data formed on the basis of the data showing a part of the area of the image represented by the background data and the subject data are synthesized together and the synthesized image data is displayed. The partial background data is data for displaying only at least a part of the area of the image represented by the background data that includes the subject area on the display. Accordingly, the subject area is larger than a case when the image represented by the background data is displayed. Thus, a composition can be easily recognized. Further, since the partial background data is data having the number of pixels accommodated in the display, when the partial background data is displayed on the display, a process for converting the number of pixels is not necessary. Accordingly, the partial background data is previously formed and stored in the nonvolatile memory. At this time, an operator is not waited for converting the number of pixels when the data is synthesized and displayed so that a time required after the data is instructed to be synthesized and displayed until the data is displayed can be shortened. Therefore, according to this digital camera, while the composition is easily recognized, the subject data can be synthesized with the background data and the synthesized image can be displayed in a short time.

Further, the digital camera according to the present invention is characterized by further comprising a cutting unit for creating the partial background data on the basis of the background data, and storing the partial background data in the nonvolatile memory while the partial background data is associated with the background data. According to this digital camera, the digital camera itself has the cutting unit for forming the partial background data. Thus, a provider of the background data may form only the background data to provide the background data to the digital camera, so that a labor for forming the partial background data is reduced.

Further, the digital camera according to the present invention is characterized in that the cutting unit further performs a subtractive color process in the partial background data. When the subtractive color process is performed in the partial background data, the throughput of a display process in the digital camera is reduced. Accordingly, the subject data can be synthesized with the background data and the synthesized image data can be displayed in a shorter time.

Further, the digital camera according to the present invention is characterized in that the nonvolatile memory further stores reduced background data associated with the background data and having pixels of the background data thinned to the number of pixels that is accommodated in the display, and the display control unit synthesizes the subject data with the partial background data and displays the synthesized image data on the display or displays the reduced background data on the display in accordance with an input switch instruction. According to this digital camera, when the whole of the image represented by the background data is to be recognized, a switch instruction for displaying the reduced background data is input so that the reduced background data can be displayed. Accordingly, the background data can be easily selected or the selected background data can be easily recognized.

Further, the digital camera according to the present invention is characterized in that further including a background data reducing unit for creating the reduced background data on the basis of the background data, and storing the reduced background data in the nonvolatile memory while the reduced background data is associated with the background data. Thus, a labor for forming the reduced background data is reduced.

### Brief Description of the Drawings

Fig. 1 is a flow chart showing the flow of processes that a digital camera according to one embodiment of the present invention associates the subject data with background data to store the associated image data in a nonvolatile memory.
Fig. 2 is a block diagram showing the digital camera according to one embodiment of the present invention.
Fig. 3(A) is a rear view of the digital camera according to one embodiment of the present invention and Fig.3 (B) is a front view thereof.
Fig. 4 is a schematic view showing a background file, a partial background file and a reduced background file stored in a nonvolatile memory.
Fig. 5 is a schematic view showing enlargedbackground data in one embodiment of the present invention.
Fig. 6 is a schematic view for explaining partial background data and reduced background data.
Fig. 7(A) is a schematic view for explaining information for associating the background data, the partial background data and the reduced background data together and Fig. 7 (B) is a schematic view for explaining information for associating the subject data with the background data.
Fig. 8 is a flow chart showing the flow of processes that the digital camera according to one embodiment of the present invention forms the partial background file and the reduced background file.
Fig. 9 is a schematic view showing the structure of a folder in the nonvolatile memory of the digital camera according to one embodiment of the present invention.
Fig. 10 is a schematic view showing a state that the subject data is synthesized with the partial background data and the synthesized image data is displayed on the display of the digital camera according to one embodiment of the present invention.

### Best Mode for Carrying Out the Invention

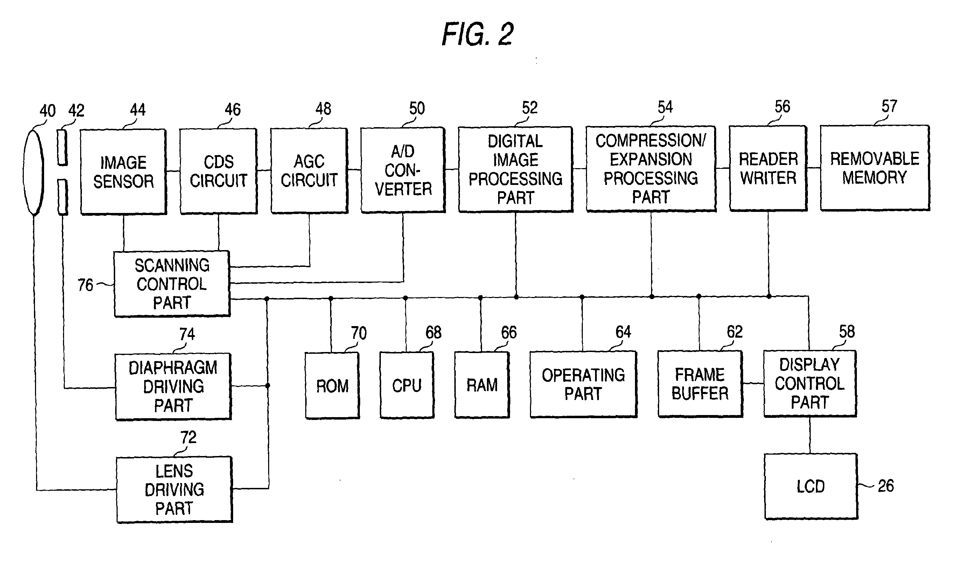

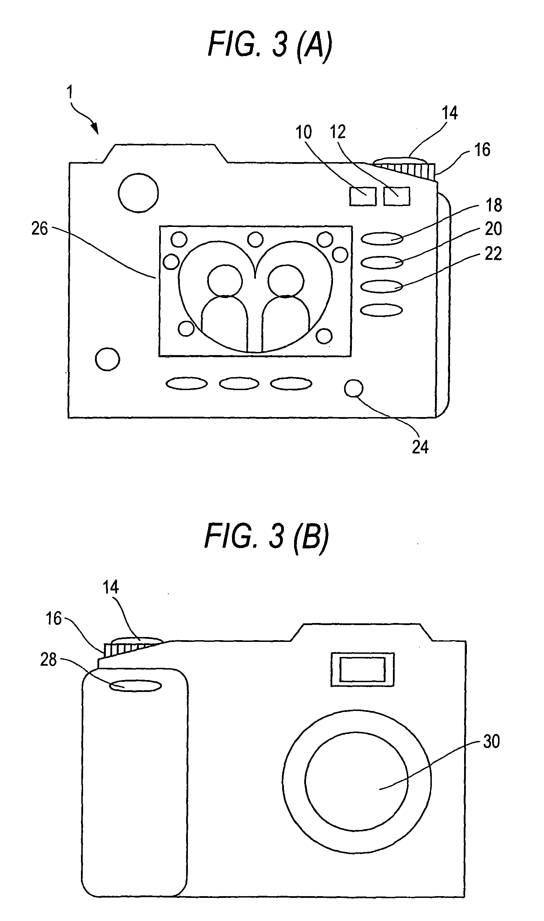

Now, a mode for carrying out the invention will be described below on the basis of an embodiment. Fig. 2 is a block diagram showing the structure of a digital still camera 1 according to one embodiment of the present invention. Fig. 3(A) and Fig.3(B) are a rear view and a front view respectively showing the external appearance of the digital camera 1.

A lens driving part 72 drives a lens 40 so that the image of a subject is formed on a light receiving part of an image sensor 44 with a magnification corresponding to a signal input from a CPU 68. A diaphragm driving part 74 drives an optical diaphragm 42 so that the quantity of light incident on the image sensor 44 becomes a quantity of incident light corresponding to the signal input from the CPU 68.

The image sensor 44 is an area image sensor in which a color filter array composed of four complementary color filters of C (Cyan), M (Magenta), Y (Yellow) and G (Green) is formed on a chip to store an electric charge obtained by photo-electrically transferring the received light for a prescribed time and output an electric signal corresponding to the quantity of the received light for each photoelectric transfer element. The color filter array may be composed of three complementary color filters of CMY or may be composed of primary color filters of R (Red), G (Green) and B(Blue).

A CDS circuit 46 performs a process for reducing noise included in an analog electric signal. AGC circuit 48 adjusts the level of the analog electric signal by adjusting a gain. An A/D converter 50 quantizes the analog electric signal subjected to the above-described processes to a digital signal of a prescribed gradation. A scanning control part 76 outputs a shift pulse, a vertical transfer pulse and a horizontal transfer pulse to the image sensor 44 and outputs a drive pulse to the CDS circuit 46, the AGC circuit 48 and the A/D converter 50 to operate them synchronously with the image sensor 44.

A digital image processing part 52 is composed of, for instance, a DSP (Digital Signal Processor), and performs an image forming process, a white balance correction, a gamma correction, a color space conversion or the like on the basis of an image signal output from the A/D converter 50. The digital image processing part 52 prepares the subject data that shows, for instance, gradation values of R, G, and B or gradation values of Y, Cb and Cr for each pixel and stores the data in a RAM 66. The image forming process described herein mainly means a process for forming image data having the four gradation values of CMYG for each pixel under an interpolating process using digital data that shows the gradation value of any of CMYG corresponding to the output of each photoelectric transfer element.

A compression/expansion processing part 54 compresses the subj ect data that is output from the digital image processing part 52 in a photographing mode to form compressed image data in accordance with, for instance, a JPEG form. Under a reproducing mode, the compression/expansion processing part expands the compressed image data read from a removable memory 57 by using a reader writer 56 and stores the image data in the RAM 66. The removable memory 57 composed of a nonvolatile memory such as a flash memory is detachably attached to the reader writer 56. The reader writer 56 writes data in the removable memory 57 and reads the data stored in the removable memory 57.

An operating part 64 includes various kinds of buttons having a power button 14 for turning ON/OFF a power source, a dial switch 16 for setting modes such as a photographing mode, a reproducing mode, a direct print mode, a partial background data forming mode or the like, a shutter button 28 for inputting an instruction of a shutter, a background setting key 18 for setting a background in the photographing mode, zoom buttons 10 and 12 for setting the magnification of a zoom lens, a next select key 20, a pre-select key 22, a determination key 24, a switch instruction button 25 for inputting a switch instruction etc. and a circuit for detecting the depression of the various kinds of buttons and the rotating angle of the dial switch 16.

A display control part 58 performs a process for thinning the image data stored in the RAM 66 with a fixed magnification in accordance with the display area of a display, a color space conversion process, a synthesizing process or the like to drive an LCD (LiquidCrystal Display) 26 as the display on the basis of the display data formed by performing these processes. In a frame buffer 62, a background area and a foreground area are provided for individually storing image data to be synthesized. The display control part 58 is provided with a synthesizing process circuit for synthesizing and displaying the image data respectively stored in the foreground area and the background area on the LCD 26 in such a manner that the pixels of the image data stored in the background area are displayed more preferentially than the transparent pixels of the image data stored in the foreground area and the opaque pixels of the image data stored in the foreground area are displayed more preferentially than the pixels of the image data stored in the background area.

The CPU 68 performs a computer program stored in a ROM 70 to control the entire part of the digital camera 1. In addition thereto, the CPU 68 performs a cutting program to carry out a process for forming a partial background file from a background file or a subtractive color process of the formed partial background data. The ROM 70 is a memory for storing the computer program for performing various kinds of controls by the CPU 68 or the cutting program. The RAM 66 is a memory for temporarily storing various kinds of programs or data.

The digital still camera 1 has the structure as described above. Now, a background file 80 for storing background data, a partial background file 90 for storing partial background data and a reduced background file 95 for storing reduced background data will be described below.

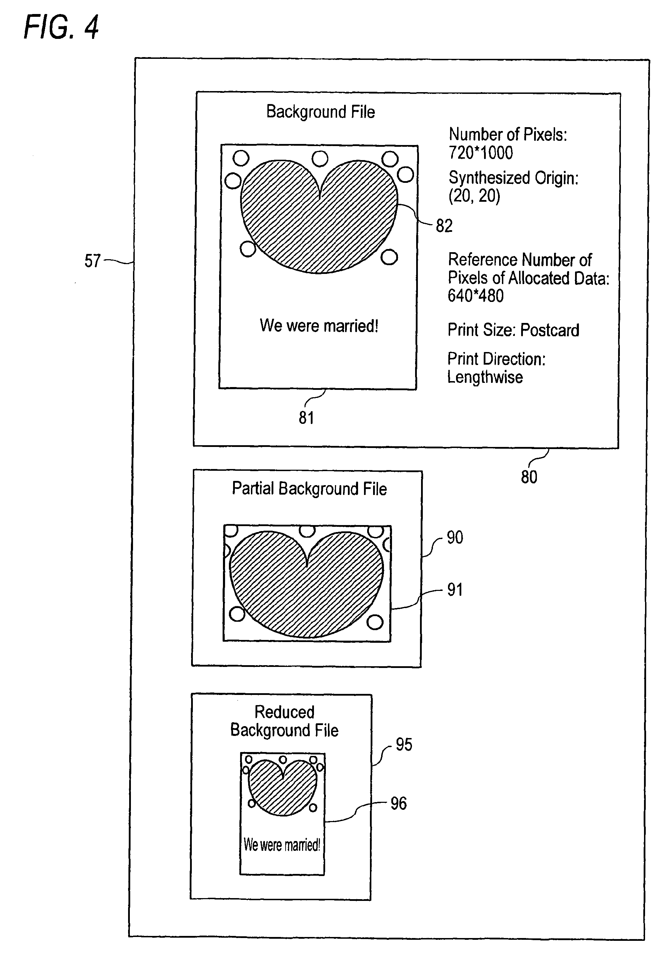

Fig. 4 is a schematic view showing the background file 80, the partial background file 90 and the reduced background file 95.

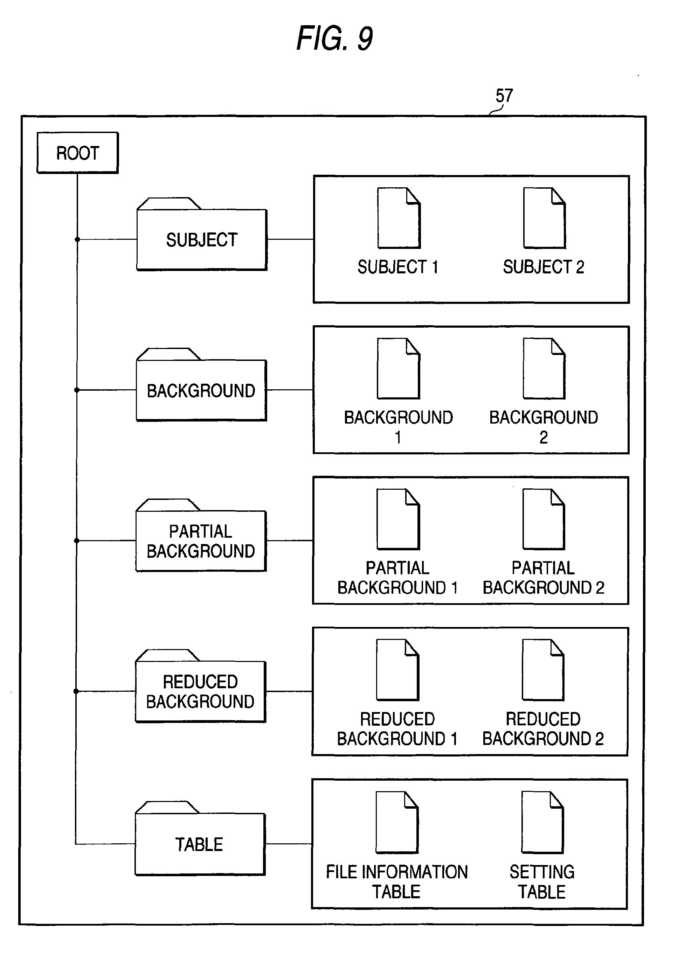

The background file 80 serves to prepare prints such as a greeting card with a photograph, a seal with a photograph or the like and is transferred from a personal computer or the like to be previously stored in the ROM 70 or the removable memory 57. An explanation will be given hereinafter on the assumption that the background file 80 is stored in a prescribed folder (background folder) of the removable memory 57, as shown in Fig. 9. The background data stored in the background file 80 represents an image 81 composed of line drawings, painted out materials, characters, etc. A hatched area 82 is an area in which data represented by a subject is inserted and synthesized, that is, the area (refer it to as "an subject area", hereinafter) to which the subject data is allocated. To the gradation values of the pixels of the area 82 of the subject, predetermined values indicating a transparency such as R=00H, G=00H, B= 00H or the like are set. A transparent area may be specified by what is called an α channel independent of each channel of RGB.

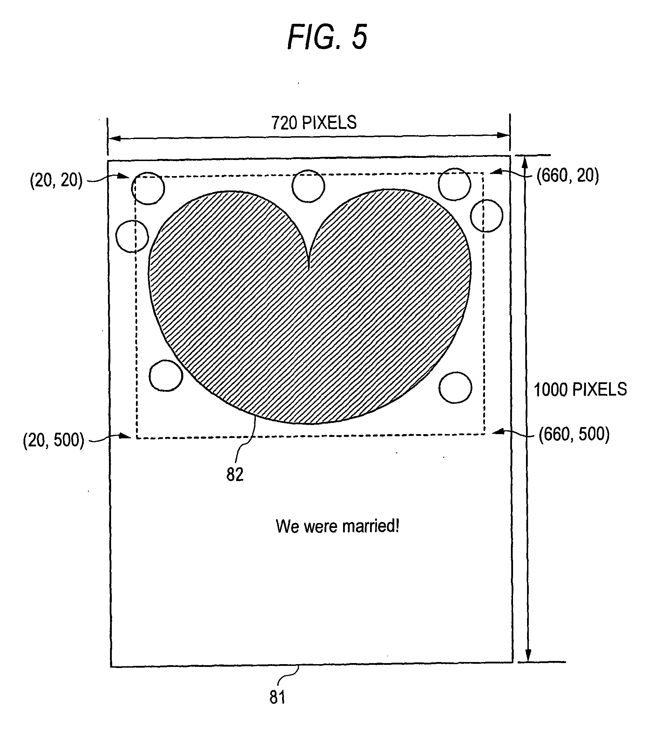

The background file 80 is composed of data showing the number of pixels of the background data, a coordinate (a coordinate of a synthesized origin) to which the coordinate of the origin of the subject data is allowed to correspond, the reference number of pixels of allocated data, a print size, the print direction (length, breadth) of the background data, etc. as well as the background data. Further, the aspect ratio of the reference number of pixels of the allocated data is set so as to correspond to the aspect ratio of the number of pixels of the display. Fig. 5 is a schematic view showing the enlarged background data. The synthesized origin of the illustrated background data is (20, 20). The reference number of the pixels of the allocated data is (640 x 480). An area surrounded by a broken line in the drawing represents an area specified by the reference number of the pixels of the allocated data by considering the synthesized origin as a reference. As shown in the drawing, the synthesized origin is set outside the area 82 of the subject and the area specified by the reference number of the pixels of the allocated data includes all of the area 82 of the subject.

Upon synthesizing process before a printing operation, the reference number of the pixels of the allocated data is compared with the number of the pixels of the subject data that is to be allocated. The background data is thinned or interpolated to a size corresponding to the number of the pixels of the subject data that is to be allocated and the coordinate of the synthesized origin is correspondingly changed.

For instance, as shown in Fig. 5, assuming that the number of the pixels of the background data is (720 x 1000), the coordinate of the synthesized origin is (20, 20), the reference number of the pixels of the allocated data is (640 x 480) and the number of the pixels of the subject data is (1280 x 960), the number of the pixels of the subject data is two times as many as the reference number of the pixels both in a horizontal direction and a vertical direction. Accordingly, the synthesizing process before the printing operation is carried out as described below. The background data is interpolated to set the number of the pixels thereof to (1440 x 2000). The coordinate of the synthesized origin is converted to (40, 40). Then, the background data is synthesized with the subj ect data so that the subj ect data is superposed on the range of (40, 40) to (1320, 1000) of the converted background data. Upon printing, an interpolating process or a thinning process or a rotating process is further carried out on the basis of the print size, the print direction of the background data or the like previously stored in the background file 80. Thus, a synthesized image having the set print size and the print direction is printed by a printer.

In the background file, the position and the size of an area on a printing sheet to which the subject data is allocated may be represented by, for instance, parameters such as an upper left coordinate and a lower right coordinate on the area corresponding to the printing sheet. Further, the subject data may be thinned or interpolated depending on the size of the area to which the subject data is allocated, and then, the thinned or interpolated subject data may be allocated to the area specified by the background file.

The subject data is synthesized with the background data, and then, the synthesized image data is printed by a personal computer or a standing alone printer. When it is not assumed that the digital still camera 1 is directly connected to the printer to print the synthesized image data, true background data used for forming the synthesized image data for printing may be stored in the personal computer or the standing alone printer and background data having a lower resolution and rougher gradation than those of the true background data may be used to perform a display process in the digital still camera 1. In such a way, the memory space of the digital camera 1 can be saved.

The partial background file 90 is composed of below-described partial background data. The partial background data represents an image 91. Further, the reduced background file 95 is likewise composed of below-described reduced background data. The reduced background data represents an image 86.

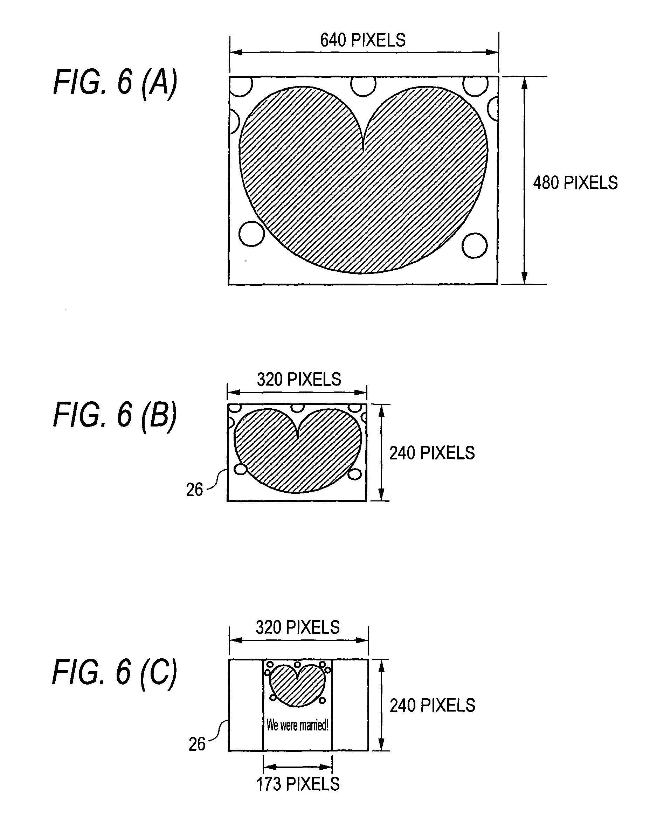

Fig. 6 is a schematic view for explaining the partial background data and the reduced background data. Firstly, the partial background data will be described. The partial background data is data formed by converting data showing a synthesizing area in the image 81 represented by the background data into the number of pixels accommodated in the LCD 26. The partial background data is formed, for instance, in such a way as described below.

Initially, the synthesizing area is determined. Specifically, in the case of the background data shown in Fig. 5, the area specified by the reference number (640 x 480) of the pixels of the allocated data by considering the synthesized origin (20, 20), that is, the range of (20, 20) to (660, 500) is determined as the synthesizing area. At this time, the background data corresponding to the synthesizing area is a part shown in Fig. 6(A).

Then, the background data corresponding to the synthesizing area is thinned to the number of pixels accommodated in the display area of the LCD 26.

For instance, when the number of pixels that can be displayed on the display area of the LCD 26 is 320 pixels in the horizontal direction x 240 pixels in the vertical direction, the number of pixels of the data showing the synthesizing area is two times as many as the number of pixels capable of being displayed on the LCD 26 both in the horizontal direction and the vertical direction. Accordingly, the pixels are thinned to 1/2 both in the horizontal direction and the vertical direction so as to be adequately displayed on the LCD 26. Thus, the partial background data in this case is formed as data having 320 x 240 pixels as shown in Fig. 6(B).

A subtractive color process is performed to the formed partial background data. The subtractive color process is a process that the number of colors represented by image data is reduced and a plurality of colors closely akin to each other are converted to one same color, that is, a process for performing a plural to single conversion. When the subtractive color process is performed, the throughput of the display control part 58 can be reduced and a time necessary for displaying can be shortened. The partial background data is formed in such a way as described above.

Now, the reduced background data will be described below. The reduced background data is what is called thumb nail image data, which is reduced data obtained by thinning the pixels of the background data while a prescribed aspect ratio is maintained so that the whole of the image represented by the background data is displayed on the LCD 26. For instance, in the case of the background data shown in Fig. 5, the reduced image data having 173 x 240 pixels is formed so that the whole of the image is displayed on the LCD 26 as shown in Fig. 6(C).

The above description is directed to the background data, the partial background data and the reduced image data. Now, a file information table S in which the background file 80 is associated with the partial background file 90 and the reduced background file 95 will be described below.

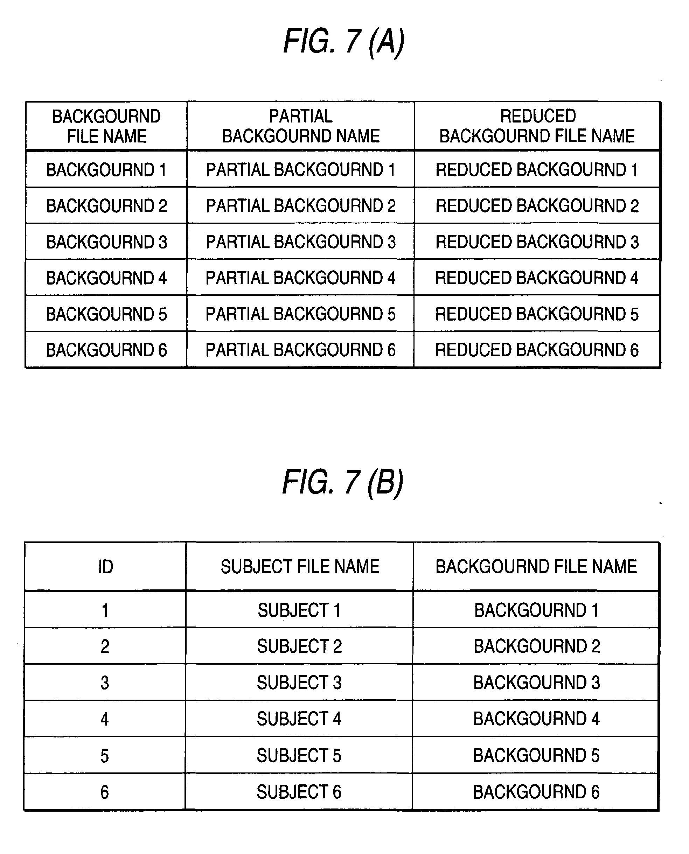

Fig. 7(A) is a diagram showing the file information table S. The file information table S is composed of associating records for associating the background file 80, the partial background file 90 and the reduced background file with one another. Each associating record comprises a "background file name", a "partial background file name" and a "reduced background file name". The "background file name" is data for immediately identifying the background file 80 in which the background data is stored by a file system such as the digital still camera 1, the personal computer or the like. The "partial background file name" and the "reduced background file name" are data similar to the "background file name". The file information table S is recorded in the table folder of the removable memory 57 shown in Fig. 9.

The background file 80, the partial background file 90 and the reduced background file 95 may not be related or associated only by the table and may be related by a directory or the common part of the respective file names.

Now, an operation of the digital still camera 1 will be described below. Firstly, a process for forming the background file 80 and the reduced background file 95 will be described below.

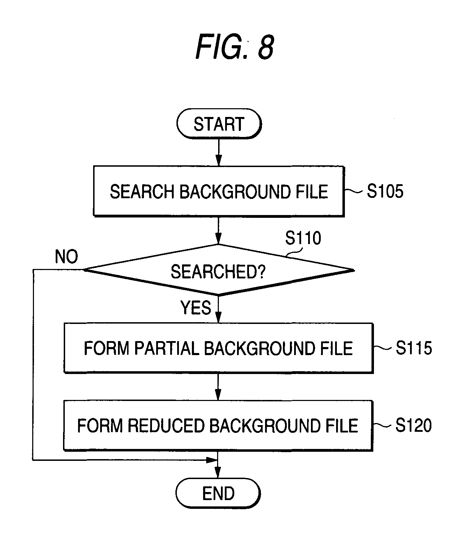

Fig. 8 is a flow chart showing the flow of processes for forming the partial background file 90 and the reduced background file 95. The processes shown in Fig. 8 are started when the removable memory 57 is mounted.

When the removable memory 57 is mounted, in step S105, the CPU 68 performs a prescribed search program to search the background file 80 with which the partial background file 90 is not associated in the background file 80 stored in the background folder of the mounted removable memory 57 on the basis of the file information table S.

In step S110, it is decided whether or not the background file 80 with which the partial background file is not associated is searched in the step S105. When the background file 80 is searched, in step S115, the partial background data is formed on the basis of the background data stored in the searched background file 80, and then, the subtractive color process is performed to form the partial background file 90 having a prescribed file form. Then, the formed partial background file 90 is stored in the partial background folder of the removable memory 57 shown in Fig. 9 by the reader writer 56. Then, a record for associating the file name of the formed partial background file 90 with the file name of the background file 80 is added to the file information table S. At this, time, any data is not stored in the " reduced background file name" of the added record.

In step S120, the reduced background data is formed on the basis of the background data stored in the searched background file 80 to form the reduced background file 95 having a prescribed file form. Subsequently, the formed reduced background file 95 is stored in the reduced background folder of the removable memory 57 shown in Fig. 9 by the reader writer 56. Then, the file name of the formed reduced background file 95 is stored in the "reduced background file name" of the record having the file name of the background file 80 of file information table S. Thus, the reduced background file 95 is associated with the background file 80.

The above-description is given to the processes for forming the background file 80 and the reduced background file 95. Now, processes for associating the subject data with the background data with which the partial background data is associated and storing the associated image data in the nonvolatile memory will be described below.

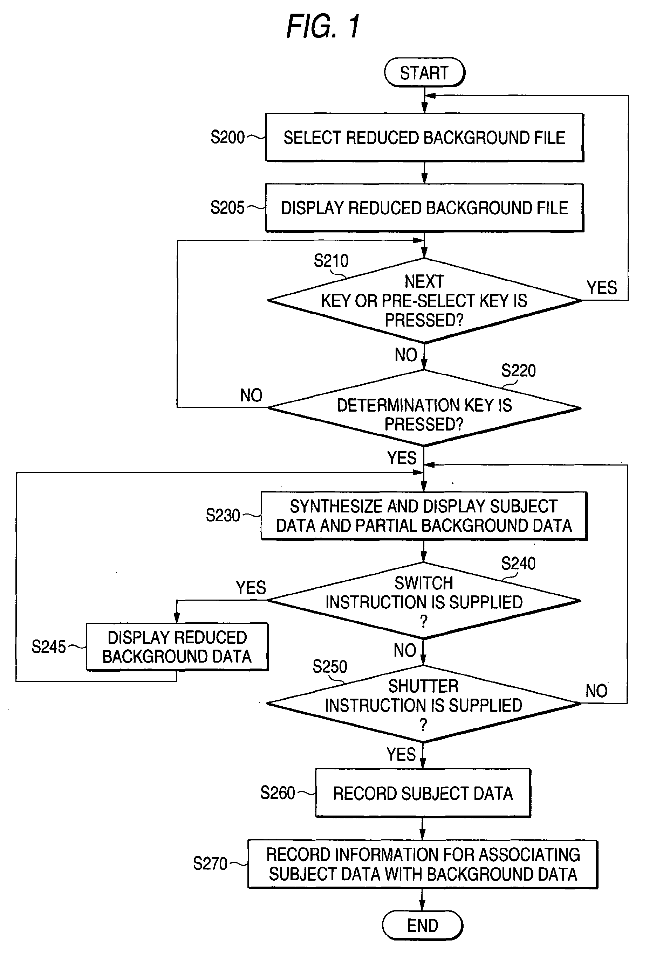

Fig. 1 is a flow chart showing the flow of processes for associating the subject data with the background data with which the partial background data is associated and storing the associated image data in the removable memory 57. The processes shown in Fig. 1 are started by pressing down the background setting key 18 by an operator in the photographing mode determined by the rotating angle of the dial switch 16.

In step S200, any one of the reduced background files stored in the removable memory 57 is selected.

In step S205, the reduced background data stored in the selected reduced background file is displayed on the LCD 26.

In step S210, when the next select key 20 or the pre-select key 22 is pressed down, the procedure returns to the step S200 to select a next or a previous reduced background file and the above-described processes are repeated.

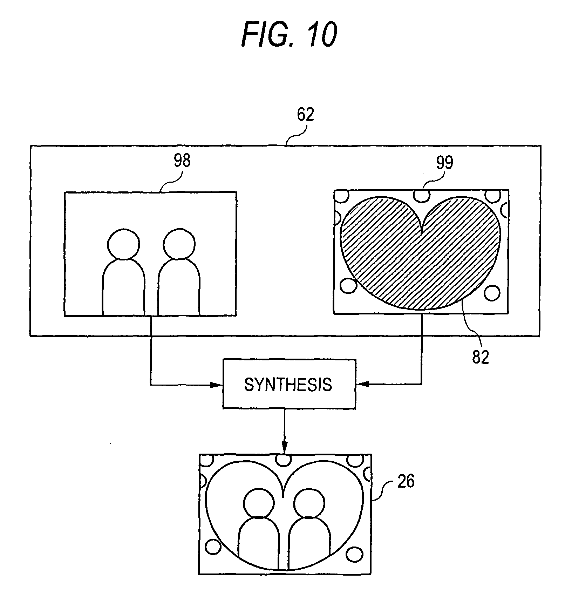

In step S220, when the determination key 24 is pressed down, the image of the subject is displayed in the area 82 of the subject of the partial background data in a moving image in step S230. Specifically, the partial background data stored in the partial background file associated with the reduced background file selected in the steps S200 to S220 is stored in the background area of the frame buffer 62. The subject data that is formed in the digital image processing part 52 is stored in the foreground area of the frame buffer 6.2. The display control part 58 synthesizes the subject data with the partial background data stored in the frame buffer 62 to output a driving signal to the LCD 26. Thus, a synthesized image is displayed. Fig. 10 is a schematic view showing the LCD 26 on which the subject data is synthesized with the partial background data and the synthesized image data is displayed. As shown in Fig. 10, an image 98 represented by the subject data is allocated to the area 82 of the subject in an image 99 represented by the partial background data. The subject data is updated for each prescribed time so that the image 98 represented by the subject data is displayed as a moving image. Thus, in the step S220, the determination key 24 is pressed down, so that the subject data can be formed so as to be matched with the selected background data, that is, a shutter instruction can be input with a suitable composition and timing.

In step S240, it is detected whether or not a switch instruction is input, that is, the switch instruction button 25 is pressed down. When the depression of the switch instruction button 25 is not detected, the procedure advances to step S250. In the step S240, when the depression of the switch instruction button 25 is detected, the procedure advances to step S245 to display the reduced background data selected in the steps S200 to S220 on the LCD 26. Thus, the operator can recognize again which of the reduced background data is selected during a synthesizing and displaying process.

In the step S250, it is detected whether or not the instruction of a shutter is input, that is, whether or not the shutter button 28 is pressed down. When the depression of the shutter button 28 is not detected, the procedure returns to the step S230 to repeat the above-described processes. In the step S250, when the depression of the shutter button 28 is detected, the procedure advances to step S260.

In the step S260, a prescribed control signal is input to the scanning control part 76 to scan an electric charge stored in the image sensor 44 for a prescribed time and form the subject data in the digital image processing part 52. The subject data is compressed in the compression/expansion processing part 54 to form compressed image data. The compressed image data is stored in the folder of the subject of the removable memory 57 shown in Fig. 9 in a prescribed file form such as a JPEG by the reader writer 56.

In step S270, information for associating the subject data that is recorded in the step S260 with the background file 80 related to the partial background file 90 in which the partial background data synthesized and displayed in the step S230 is stored is stored in the removable memory 57. Specifically, an associating record is formed in which the file name of the subject data recorded in the step S260 is designated as the " file name of the subject", and the file name of the background file 80 associated with the partial background file 90 related to the reduced background file 95 selected by pressing down the determination key24 in the step S220 is designated as the "background file name". The associating record is added to a setting table T shown in Fig. 7(B).

Here, the setting table T for managing the information for associating the subject data with the background file 80 will be described below. The setting table T is recorded in the table folder of the removable memory 57. The setting table T is composed of associating records for associating the file of the subject with the background file 80 on the basis of one to one. Each of the associating records comprises an ID, the file name of the subject and the background file name. The "file name of the subject" indicates data for immediately identifying the file of the subject in which the subject data is stored by the file system such as the digital still camera 1, the personal computer or the like.

To the setting table T, the associating records for associating the file of the subject with the background file 80 with arbitrary combinations can be added without any restriction within an upper limit of the capacity of a memory. Accordingly, the setting table T is used so that information for associating a plurality of files of the subject with one background file 80 can be stored in the removable memory 57.

The subject data and the background data may be associated with each other not by the table but by a directory. The file name of the other party may be stored in the file of the subject or the background file 80 so that the subject data is associated with the background data. Further, an associating file in which the path of the background file is described may be recorded on each file of the subject to associate the file name of the associating file with the file name of the file of the subj ect (for instance, a part of one file name corresponds to a part of the other file name). Thus, the subject data may be associated with the background data.

In the digital still camera 1 of this embodiment, the background data is not synthesized with the subject data. The partial background data formed on the basis of the data showing a part of the area of the image represented by the background data is synthesized with the subject data and the synthesized image data is displayed. The partial background data is data for displaying on the display 26 at least a part of the area of the image represented by the background data including the area 82 of the subject, that is, only the synthesizing area. Therefore, the subject area is displayed to be larger than a case in which the image represented by the background data is displayed. Thus, a composition is easily recognized. Further, the partial background data is data having the number of pixels (320 x 240) accommodated in the display area (320 x 240) of the LCD 26. The number of pixels in the horizontal direction and the number of pixels in the vertical direction are located within a range of the number of pixels capable of being displayed on the LCD 26. Accordingly, when the image displayed on the LCD 26, a process for converting the number of pixels such as thinning or interpolating the number of pixels is not required. In the digital still camera 1 of this embodiment, the partial background data is previously formed, that is, when the removable memory 57 is mounted. Accordingly, upon synthesizing and displaying process the operator does not need to wait for a process for extracting data representing the synthesizing area from the background data and a proces for converting the number of pixels of the extracted data so as to be accommodated in the display area of the display. Therefore, according to this digital still camera 1, while the composition is easily recognized, the subject data can be synthesized with the background data and the synthesized image can be displayed in a short time. Further, since the operator does not need to wait for the processes, the operator can reduce a possibility of missing a timing of photographing.

Further, the digital still camera 1 of this embodiment stores the formed partial background data in the nonvolatile memory, so that the operator may instruct the partial background data to be formed only once. Thus, the operator may wait for a conversion process of the number of pixels only once.

In the digital still camera 1 of this embodiment, when the removable memory 57 is mounted, the partial background file 90 and the reduced background file 95 are formed. However, a means for instructing the partial background file and the reduced background file to be formed may be provided so that when the operator instructs to form them, the partial background file and the reduced background file may be formed.

In the above-described embodiment, the digital still camera is explained as an example, however, the present invention may be applied to a digital video camera.

## Claims

1. A digital camera comprising:
a photographing unit for creating subject data in accordance with an output of an image sensor;
a display;
a nonvolatile memory that stores background data to be synthesized with the subject data in which a subject area to which an image represented by the subject data is allocated is previously set in an image represented by the background data, and partial background data that is associated with the background data, shows at least apart of an area of the image represented by the background data including the subject area and has a number of pixels accommodated in the display area of the display;
a display control unit for synthesizing the subject data with the partial background data and displaying the synthesized image data on the display; and
a subject data storing unit for storing the subject data in the nonvolatile memory while the subject data is associated with the background data that is associated with the partial background data.

2. The digital camera according to claim 1, further comprising a cutting unit for creating the partial background data on the basis of the background data, and storing the partial background data in the nonvolatile memory while the partial background data is associated with the background data.

3. The digital camera according to claim 2, wherein the cutting unit further performs a subtractive color process in the partial background data.

4. The digital camera according to any of claims 1 to 3, wherein the nonvolatile memory further stores reduced background data associated with the background data and having pixels of the background data thinned to the number of pixels that is accommodated in the display, and the display control unit synthesizes the subject data with the partial background data and displays the synthesized image data on the display or displays the reduced background data on the display in accordance with an input switch instruction.

5. A digital camera according to claim 4, further including a background data reducing unit for creating the reduced background data on the basis of the background data, and storing the reduced background data in the nonvolatile memory while the reduced background data is associated with the background data.
